# FASCICULE DE BREVET EUROPEEN

(11) **EP 1 021 309 B1**
(45) Date de publication et mention de la délivrance du brevet: **22.08.2001**
(21) Numéro de dépôt: 99934797.4
(22) Date de dépôt: 28.07.1999
(51) Int. Cl.: B60H 1/00

(54) **TABLEAU DE COMMANDE A DOUBLE COMMANDE ROTATIVE POUR VEHICULE AUTOMOBILE**
KRAFTFAHRZEUGBEDIENUNGSTAFEL MIT DOPPELTEM DREHKNOPF
CONTROL PANEL WITH DOUBLE ROTARY CONTROL FOR MOTOR VEHICLE

(30) Priorité: 12.08.1998 FR 9810341
(43) Date de publication de la demande: 26.07.2000
(73) Titulaire: Valeo Electronique, 94042 Créteil (FR)
(72) Inventeur: LACROIX, Louis, F-94500 Champigny sur Marne (FR)
(86) Numéro de dépôt international: FR9901862
(87) Numéro de publication internationale: WO0009353

(56) Documents cités:
- DE-A- 2 808 661
- FR-A- 2 693 408
- US-A- 3 411 541
- US-A- 4 995 554

## Description

L'invention concerne un tableau de commande pour une installation de véhicule automobile, telle que par exemple une installation de chauffage, ventilation et/ou climatisation de l'habitacle du véhicule.

Elle concerne plus particulièrement un tableau de commande du type comprenant un boîtier supportant au moins une double commande formée de deux boutons rotatifs coaxiaux disposés en saillie par rapport au boîtier et couplés respectivement à deux arbres, lesquels sont propres à être reliés à des organes de l'installation.

On connaît déjà des tableaux de commande de ce type, en particulier par la publication FR 2 756 067 de la Demanderesse, ou encore par les publications FR 2 631 719, FR 2 693 408 (conforme au préambule) et US 5 093 764.

L'un des buts de l'invention est de réduire l'encombrement d'un tableau de commande du type précité de manière à pouvoir l'intégrer plus facilement dans une planche de bord de véhicule automobile.

C'est encore un but de l'invention de procurer un tel tableau de commande qui présente une façade étroite pour constituer un tableau du type extra plat.

L'invention propose à cet effet un tableau de commande du type défini en introduction, dans lequel l'un des arbres, ou premier arbre, porte une vis sans fin coaxiale propre à entraîner en rotation une roue dentée autour d'un axe orthogonal à l'axe de l'arbre, ladite roue dentée étant propre à être couplée fonctionnellement à un premier organe de l'installation, et dans lequel l'autre arbre, ou deuxième arbre, est parallèle au premier arbre et est propre à être couplé fonctionnellement à un deuxième organe de l'installation.

L'utilisation conjointe d'une vis sans fin et d'une roue dentée contribue à réduire l'encombrement du tableau de commande étant donné que cette vis et cette roue peuvent occuper un espace restreint relativement plat.

Par l'expression "roue dentée", on entend désigner aussi bien une roue dentée complète qu'un secteur denté.

D'autres caractéristiques optionnelles, complémentaires ou alternatives, de l'invention sont énoncées ci-après :
- l'un du premier arbre et du deuxième arbre est coaxial aux boutons de commande.
- Le deuxième arbre est coaxial aux boutons de commande et est entraîné directement par l'un des boutons, appelé "deuxième bouton", tandis que le premier arbre est entraîné indirectement par l'autre bouton, appelé "premier bouton".
- Le premier bouton est solidaire en rotation d'une couronne dentée qui engrène avec un pignon denté solidaire en rotation de la vis sans fin.
- La roue dentée est solidaire en rotation d'un levier de commande.
- Le levier de commande est relié à un câble de commande, lequel est relié au premier organe de l'installation.
- L'axe de la roue dentée est sensiblement perpendiculaire à une paroi de fond du boîtier.
- Le deuxième arbre présente une extrémité libre qui est reliée directement au deuxième organe de l'installation.
- Le deuxième arbre présente une extrémité libre qui est reliée indirectement au deuxième organe de l'installation.
- Le deuxième organe de l'installation est un commutateur rotatif.
- Le tableau comprend une double commande et au moins une commande à curseur disposée en saillie par rapport au boîtier.
- Le tableau comprend une double commande et deux commandes à curseur disposées de part et d'autre de la double commande.
- Le tableau comprend deux doubles commandes ayant des axes parallèles.

Dans la description qui suit, faite seulement à titre d'exemple, on se réfère aux dessins annexés, sur lesquels :
- la figure 1 est une vue en perspective d'un tableau de commande selon une première forme de réalisation de l'invention ;
- la figure 2 est une vue de dessous du tableau de commande de la figure 1 ;
- la figure 3 est une vue éclatée du tableau de commande des figures 1 et 2 ; et
- la figure 4 est une vue de dessous d'un tableau de commande selon une deuxième forme de réalisation de l'invention.

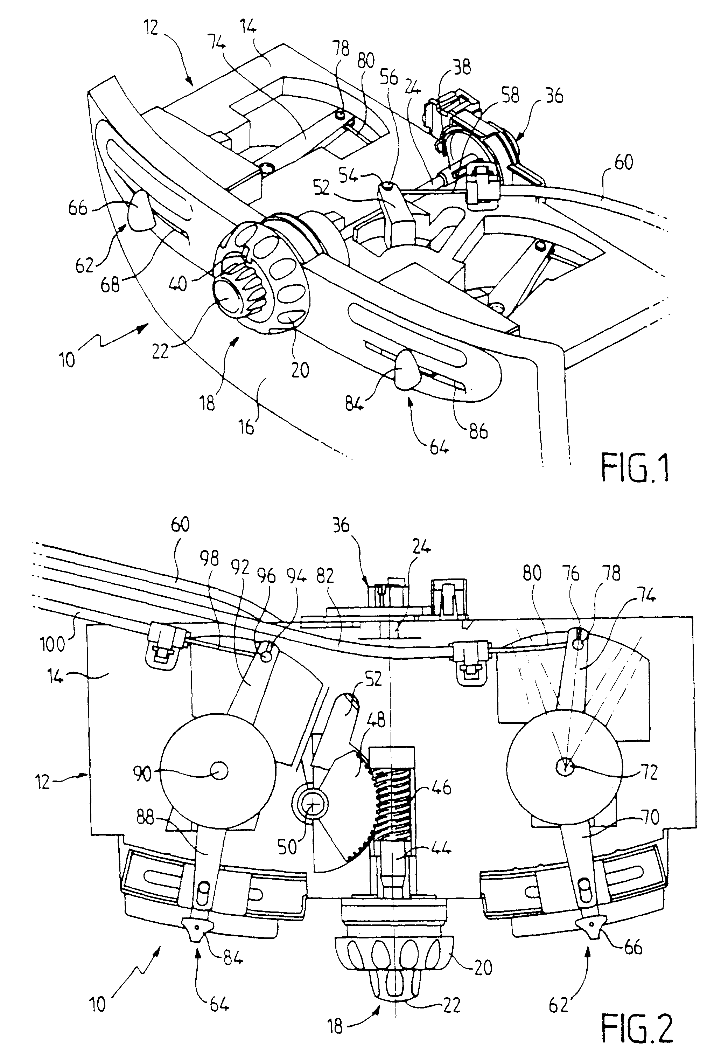

On se réfère tout d'abord à la figure 1 qui montre un tableau de commande 10 selon l'invention destiné à faire partie d'une installation de chauffage-ventilation et/ou climatisation de l'habitacle d'un véhicule automobile.

Ce tableau comprend un boîtier 12 comprenant essentiellement une paroi de fond 14 constituant une platine de forme générale rectangulaire et une façade 16 destinée à s'encastrer dans la planche de bord (non représentée) du véhicule.

Le tableau de commande 10 comprend une double commande 18 disposée sensiblement en partie centrale de la façade 16 et comprenant deux boutons rotatifs coaxiaux, à savoir un premier bouton 20, encore appelé "bouton extérieur", et un deuxième bouton 22, encore appelé "bouton intérieur". Ces deux boutons sont disposés en saillie par rapport à la façade 16 du tableau de commande. Dans l'exemple, le bouton 20 sert au réglage de la température de l'air envoyé dans l'habitacle, tandis que le bouton 22 sert à régler la vitesse du pulseur (non représenté) servant à pulser l'air dans l'habitacle.

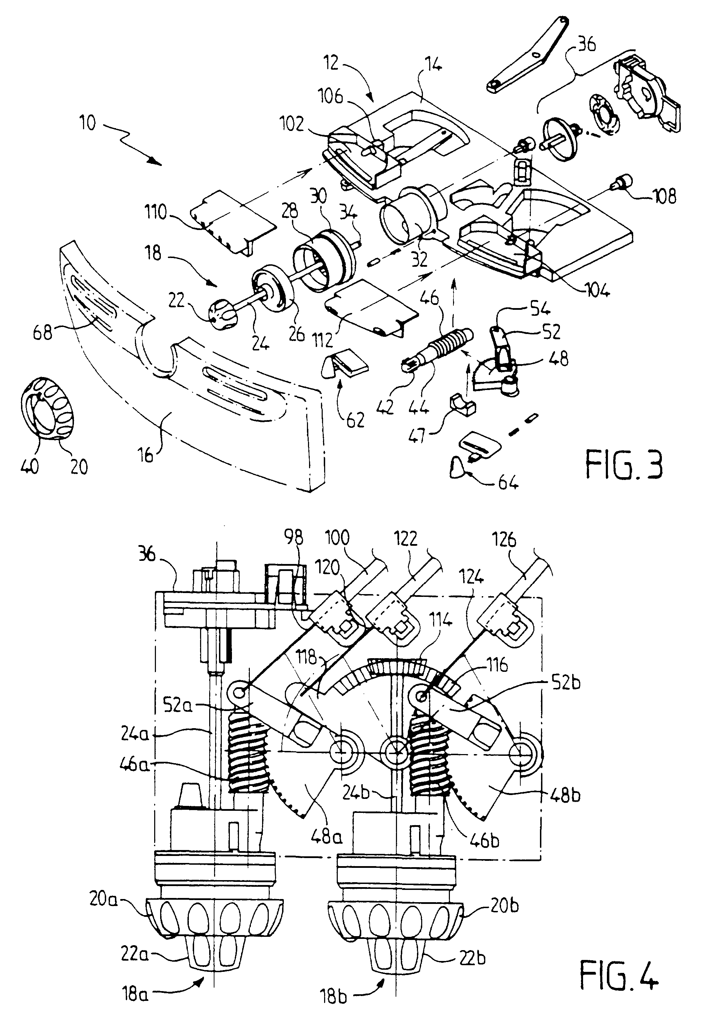

Comme on le voit mieux sur la figure 3, le bouton 22 est solidaire d'un arbre 24, encore appelé "deuxième arbre", lequel traverse successivement un disque 26 portant des repères et un tambour 28 solidaire d'une couronne dentée 30 portant une denture intérieure. Le tambour 28 est guidé par une portée cylindrique 32 formant partie intégrante du boîtier 12. L'arbre 24 possède une extrémité libre 34 qui est prévue pour être couplée directement à un commutateur 36 qui constitue un organe de l'installation et qui sert à régler la vitesse de rotation du pulseur (non représenté) que comporte l'installation. A cet effet, l'extrémité 34 de l'arbre 24 est propre à être reçue dans un manchon 38 que comporte le commutateur 36.

Le bouton 20 (figures 1 et 3) comporte un index 40 permettant son calage sur le tambour 28. Ainsi, la couronne dentée 30 peut être entraînée en rotation dans un sens ou dans l'autre par le bouton 20.

La couronne dentée 30 (figures 2 et 3) engrène avec un pignon denté 42 calé sur un arbre 44, appelé "premier arbre", sur lequel est calé en outre une vis sans fin 46. L'arbre 44 est maintenu en position par un étrier 47 fixé à la paroi de fond 14. Ainsi, le premier bouton 20 et le second bouton 22 sont propres à entraîner en rotation respectivement un premier arbre 44 et un deuxième arbre 24, qui s'étendent parallèlement entre eux. L'entraînement de l'arbre 44 s'effectue avec un rapport de transmission, tandis que l'entraînement de l'arbre 24 est direct.

La vis sans fin 46 est propre à coopérer avec un secteur denté 48 (figures 2 et 3) qui est propre à pivoter autour d'un axe 50 qui s'étend orthogonalement à l'axe de l'arbre 44. En outre, cet axe 50 s'étend perpendiculairement au plan de la paroi de fond 14, si bien que la vis sans fin 46 et la roue dentée 48 occupent un espace relativement plat et étroit et qui peut être compris au moins en partie dans l'épaisseur de la paroi de fond.

Le secteur denté 48 est solidaire en rotation d'un levier 52 comportant une encoche 54 propre à recevoir un pion 56 prévu à une extrémité d'un câble de commande 58 qui traverse une gaine 60 (figure 1). L'autre extrémité du câble est destinée à actionner un volet de réglage (non représenté) servant à ajuster la température de l'air envoyé dans l'habitacle.

Le tableau de commande des figures 1 à 3 comporte en outre deux commandes à curseurs 62 et 64 disposées de part et d'autre de la double commande 18. La commande 62 comprend une tirette 66 passant au travers d'une fente 68 de la façade et actionnant un levier 70 monté en rotation autour d'un axe 72 et solidaire en rotation d'un autre levier 74. Ce levier 74 possède une encoche 76 propre à recevoir un pion 78 prévu à l'extrémité d'un câble 80 traversant une gaine 82. Le câble 80 est propre à actionner, dans l'exemple, une commande d'entrée d'air (non représentée) servant à alimenter l'installation soit par de l'air extérieur prélevé à l'extérieur de l'habitacle, soit par de l'air recirculé prélevé à l'intérieur de l'habitacle.

La commande 64 comporte une tirette 84 passant au travers d'une fente 86 de la façade. Cette tirette actionne un levier 88 monté pivotant autour d'un axe 90 et solidaire d'un autre levier 92. Ce dernier possède une encoche 94 propre à recevoir un pion 96 monté à l'extrémité d'un câble de commande 98 passant au travers d'une gaine 100. L'autre extrémité du câble 98 est propre à être reliée à un autre organe de l'installation, dans l'exemple à une commande servant à répartir l'air entre différentes buses de distribution débouchant dans l'habitacle.

Ainsi, comme on le voit mieux sur les figures 1 et 2, l'ensemble des organes de commande précités occupe un faible encombrement et permet de constituer un tableau de commande du type "extra-plat" pouvant être facilement logé dans la planche de bord du véhicule.

Comme on peut le voir plus particulièrement sur la figure 3, le boîtier du tableau de commande comporte en outre deux boites à lumière 102 et 104 susceptibles de recevoir des ampoules respectives 106 et 108, ces boites à lumière étant masquées par des caches respectifs 110 et 112 portant différents sigles ou repères.

Dans la forme de réalisation de la figure 4, à laquelle on se réfère maintenant, le tableau de commande comporte deux doubles commandes 18a et 18b comportant respectivement deux boutons coaxiaux 20a et 22a, et deux boutons coaxiaux 20b et 22b. Le bouton 22a entraîne directement un arbre 24a tandis que le bouton 20a entraîne une vis sans fin 46a autour d'un axe parallèle à celui de l'arbre 24a.

De façon correspondante, le bouton 22b entraîne directement un arbre 24b, tandis que le bouton 20b entraîne indirectement une vis sans fin 46b autour d'un axe parallèle à celui de l'arbre 24b. Comme on peut le voir sur la figure 4, les axes respectifs de l'arbre 24a, de la vis sans fin 46a, de l'arbre 24b et de la vis sans fin 46b sont parallèles et situés dans un même plan qui correspond au plan général de la plaque de fond du boîtier. L'arbre 24a entraîne directement un commutateur 36 analogue à celui décrit précédemment. La vis sans fin 46a engrène avec une roue dentée 48a solidaire en rotation d'un levier 52a qui agit sur un câble 98 analogue à celui décrit dans la forme de réalisation des figures 1 à 3.

L'arbre 24b est muni d'un pignon denté 114 qui engrène avec un secteur denté 116 solidaire en rotation d'un levier 118 actionnant un câble 120 traversant une gaine 122.

La vis sans fin 46b engrène avec un secteur denté 48b solidaire en rotation d'un levier 52b actionnant un câble 124 traversant une gaine 126.

On comprendra que les câbles 120 et 124 peuvent jouer le rôle des câbles 80 et 98 de la forme de réalisation précédente, la différence étant que ces câbles sont actionnés, non pas par des mécanismes à tirette, mais par une double commande coaxiale.

La forme de réalisation des figures 1 à 3 utilise par conséquent une double commande rotative et deux commandes à tirette pour réaliser quatre commandes en tout. Cette forme de réalisation offre différents avantages, dont un encombrement limité en hauteur et un gain de surface en façade. La multiplication de vitesse entre le bouton de commande et la vis sans fin permet d'avoir une sensation de commande très douce et agréable. En outre, l'utilisation d'une commande vis sans fin, roue dentée permet d'avoir une commande irréversible.

La forme de réalisation de la figure 4 permet d'utiliser deux doubles commandes pour réaliser en tout quatre commandes. Ces deux doubles commandes sont semblables à celles décrites dans la première forme de réalisation de l'invention. On réalise donc quatre commandes sur deux axes parallèles. Les avantages principaux se situent au niveau de l'encombrement limité en hauteur et en largeur, ce qui permet de réaliser un gain de surface en façade.

Par ailleurs, l'utilisation de ces double-boutons et leur intégration dans des tableaux de commande de type extra-plat permettent des gains importants au niveau de la décoration qui se fait alors au niveau des boutons.

Il peut aussi être envisagé d'effectuer la commande directe par un système à roue et vis sans fin, avec un bouton au centre relié à un axe comportant une vis sans fin engrenant avec un pignon relié à un levier.

## Revendications

1. Tableau de commande pour une installation de véhicule, comprenant un boîtier (12) supportant au moins une double commande (18) formée de deux boutons rotatifs coaxiaux (20, 22) disposés en saillie par rapport au boîtier et couplés respectivement à deux arbres (24, 44), lesquels sont propres à être reliés à des organes de l'installation,
caractérisé en ce que l'un des arbres (44), ou premier arbre, porte une vis sans fin coaxiale (46) propre à entraîner en rotation une roue dentée (48) autour d'un axe (50) orthogonal à l'axe de l'arbre, ladite roue dentée étant propre à être couplée fonctionnellement à un premier organe de l'installation, et en ce que l'autre arbre (24), ou deuxième arbre, est parallèle au premier arbre et est propre à être couplé fonctionnellement à un deuxième organe de l'installation.

2. Tableau de commande selon la revendication 1, caractérisé en ce que l'un du premier arbre (44) et du deuxième arbre (24) est coaxial aux boutons de commande (20, 22).

3. Tableau de commande selon la revendication 2, caractérisé en ce que le deuxième arbre (24) est coaxial aux boutons de commande (20, 22) et est entraîné directement par l'un des boutons (22), appelé "deuxième bouton", tandis que le premier arbre (44) est entraîné indirectement par l'autre bouton (20), appelé "premier bouton".

4. Tableau de commande selon la revendication 3, caractérisé en ce que le premier bouton (20) est solidaire en rotation d'une couronne dentée (30) qui engrène avec un pignon denté (42) solidaire en rotation de la vis sans fin (46).

5. Tableau de commande selon l'une des revendications 1 à 4, caractérisé en ce que la roue dentée (48) est solidaire en rotation d'un levier de commande (52).

6. Tableau de commande selon la revendication 5, caractérisé en ce que le dit levier de commande (52) est relié à un câble de commande (58), lequel est relié au premier organe de l'installation.

7. Tableau de commande selon l'une des revendications 1 à 6, caractérisé en ce que l'axe (50) de la roue dentée (48) est sensiblement perpendiculaire à une paroi de fond (14) du boîtier (12).

8. Tableau de commande selon l'une des revendications 1 à 7, caractérisé en ce que le deuxième arbre (24) présente une extrémité libre qui est reliée directement au deuxième organe de l'installation.

9. Tableau de commande selon l'une des revendications 1 à 7, caractérisé en ce que le deuxième arbre (24) présente une extrémité libre qui est reliée indirectement au deuxième organe de l'installation.

10. Tableau de commande selon l'une des revendications 8 et 9, caractérisé en ce que le deuxième organe de l'installation est un commutateur rotatif (36).

11. Tableau de commande selon l'une des revendications 1 à 10, caractérisé en ce qu'il comprend une double commande (18) et au moins une commande à curseur (62, 64) disposée en saillie par rapport au boîtier.

12. Tableau de commande selon la revendication 11, caractérisé en ce qu'il comprend une double commande (18) et deux commandes à curseur (62, 64) disposées de part et d'autre de la double commande.

13. Tableau de commande selon l'une des revendications 1 à 10, caractérisé en ce qu'il comprend deux doubles commandes (18a et 18b) ayant des axes parallèles.

## Patentansprüche

1. Steuerpaneel für eine Kraftfahrzeugsausstattung, umfassend ein Gehäuse (12), welches zumindest eine Doppelsteuerung (18) stützt, gebildet aus zwei koaxialen Drehknöpfen (20, 22), die vorspringend angeordnet sind mit bezug auf das Gehäuse und jeweils mit zwei Wellen (24, 44) gekoppelt sind, die mit Organen der Ausstattung verbunden werden können, **dadurch gekennzeichnet, daß** eine der Wellen (44), auch erste Welle genannt, eine koaxiale Endlosschraube (46) trägt, die rotationsmäßig ein Zahnrad (48) um eine Achse (50), orthogonal zur Achse der Welle antreiben kann, wobei das Zahnrad funktionell mit einem ersten Organ der Ausstattung gekoppelt werden kann, und daß die andere Welle (24), auch zweite Welle genannte, parallel zur ersten Welle vorliegt und funktionell mit einem zweiten Organ der Ausstattung gekoppelt werden kann.

2. Steuerpaneel nach Anspruch 1, **dadurch gekennzeichnet, daß** eine von der ersten Welle (44) und der zweiten Welle (24) koaxial zu den Steuerknöpfen (20, 22) vorliegt.

3. Steuerpaneel nach Anspruch 2, **dadurch gekennzeichnet, daß** die zweite Welle (24) koaxial zu den Steuerknöpfen (20, 22) vorliegt und direkt von einem der Knöpfe (22) , welcher zweiter Knopf genannt wird, angetrieben wird, während die erste Welle (44) indirekt von dem anderen Knopf (20) angetrieben wird, der erster Knopf genannt wird.

4. Steuerpaneel nach Anspruch 3, **dadurch gekennzeichnet, daß** der erste Knopf (20) drehfest zu einem Zahnkranz (30) ist, welcher mit einem gezahnten Ritzel (42) in Eingriff steht, drehfest mit Bezug die Endlosschraube (46).

5. Steuerpaneel nach einem der Ansprüche 1-4, **dadurch gekennzeichnet, daß** das Zahnrad (48) drehfest zu einem Steuerhebel (52) ist.

6. Steuerpaneel nach Anspruch 5, **dadurch gekennzeichnet, daß** der Steuerhebel (52) mit einem Steuerkabel (58) verbunden ist, welches mit dem ersten Organ der Ausstattung verbunden ist.

7. Steuerpaneel nach einem der Ansprüche 1-6, **dadurch gekennzeichnet**, daß die Achse (50) des Zahnrads (48) im wesentlichen senkrecht zu einer Bodenwandung (14) des Gehäuses (12) vorliegt.

8. Steuerpaneel nach einem der Ansprüche 1-7, **dadurch gekennzeichnet, daß** die zweite Welle (24) ein freies Ende aufweist, welches direkt mit dem zweiten Organ der Ausstattung verbunden ist.

9. Steuerpaneel nach einem der Ansprüche 1-7, **dadurch gekennzeichnet, daß** die zweite Welle (24) ein freies Ende aufweist, welches indirekt mit dem zweiten Organ der Ausstattung verbunden ist.

10. Steuerpaneel nach einem der Ansprüche 8 und 9, **dadurch gekennzeichnet, daß** das zweite Organ der Ausstattung ein Drehschalter (36) ist.

11. Steuerpaneel nach einem der Ansprüche 1-10, **dadurch gekennzeichnet, daß** es eine Doppelsteuerung (18) sowie zumindest eine Cursor- oder Schiebesteuerung (62, 64) umfaßt, angeordnet vorspringend mit Bezug auf das Gehäuse.

12. Steuerpaneel nach Anspruch 11, **dadurch gekennzeichnet, daß** es eine Doppelsteuerung (18) und zwei Cursor- oder Schiebesteuerungen (62, 64) umfaßt, vorgesehen beidseitig der Doppelsteuerung.

13. Steuerpaneel nach einem der Ansprüche 1-10, **dadurch gekennzeichnet, daß** es zwei Doppelsteuerungen (18a und 18b) mit parallelen Achsen umfaßt.

## Claims

1. A control panel for installation in a vehicle, comprising a body (12) supporting at least one dual control (1) which consists of two coaxial rotary knobs (20, 22), projecting with respect to the body and coupled to two respective spindles (24, 44), which are adapted to be coupled to working parts of the installation,
characterised in that one of the spindles (44), or the first spindle, carries a coaxial worm (46) which is adapted to rotate a toothed wheel (4) about an axis (50) at right angles to the axis of the spindle, the said toothed wheel being adapted to be operatively coupled to a first working part of the installation, and in that the other, or second, spindle (24) is parallel to the first spindle and is adapted to be operatively coupled to a second working part of the installation.

2. A control panel according to Claim 1, characterised in that either the first spindle (44) or the second spindle (24) is coaxial with the control knobs (20, 22).

3. A control panel according to Claim 2, characterised in that the second spindle is coaxial with the control knobs (20, 22) and is turned directly by one of the knobs, referred to as a "second knob", while the first spindle (44) is turned indirectly by the other knob (20), which is referred to as the "first knob".

4. A control panel according to Claim 3, characterised in that the first knob (20) is arranged to rotate with a toothed crown (30) which meshes with a toothed pinion (42) coupled in rotation with the worm (46).

5. A control panel according to one of Claims 1 to 4, characterised in that the toothed wheel (4) is coupled in rotation to a control lever (52).

6. A control panel according to Claim 5, characterised in that the control lever (52) is coupled to a control cable (5) which is connected to the first working part of the installation.

7. A control panel according to one of Claims 1 to 6, characterised in that the axis (50) of the toothed wheel (4) is substantially at right angles to a base wall (14) of the body (12).

8. A control panel according to one of Claims 1 to 7, characterised in that the second spindle (24) has a free end which is coupled directly to the second working part of the installation.

9. A control panel according to one of Claims 1 to 7, characterised in that the second spindle has a free end which is coupled indirectly to the second working part of the installation.

10. A control panel according to Claim 8 or Claim 9, characterised in that the second working part of the installation is a rotary switch (36).

11. A control panel according to one of Claims 1 to 10, characterised in that it includes a dual control (18) and at least one cursor-type control (62, 64), which are disposed on either side of the body.

12. A control panel according to Claim 11, characterised in that it includes a dual control and two cursor-type controls, which are disposed on either side of the dual control.

13. A control panel according to one of Claims 1 to 10, characterised in that it includes two dual controls (18a and 18b), having parallel axes.
